Europäisches Patentamt

European Patent Office

Office européen des brevets

(19)

(11) Publication number: **0 097 111**
**B1**

(12) **EUROPEAN PATENT SPECIFICATION**

(45) Date of publication of patent specification: **03.06.87**

(51) Int. Cl.⁴: **F 16 B 37/12**

(21) Application number: **83630098.8**

(22) Date of filing: **02.06.83**

(54) **Integral ring-locked insert or stud.**

(30) Priority: **11.06.82 US 387702**

(43) Date of publication of application:
**28.12.83 Bulletin 83/52**

(45) Publication of the grant of the patent:
**03.06.87 Bulletin 87/23**

(84) Designated Contracting States:
**BE CH DE FR GB IT LI NL SE**

(56) References cited:
**CH-A- 463 882**
**DE-A-1 475 145**
**DE-A-2 062 968**
**GB-A-1 164 371**
**US-A-3 179 144**

(73) Proprietor: **REXNORD INC.**
**P.O. Box 2022**
**Milwaukee, Wisconsin 53201 (US)**

(72) Inventor: **Rosan, Jose, Jr.**
**1542 Galaxy Drive**
**Newport Beach California 92660 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

# Description

The present invention relates to an integral ring-locked insert or stud of the type described in the precharacterizing portion of claim 1.

Inserts installed in a workpiece provide a means for attachment of an object to the workpiece. Inserts are used when the stress requirements are greater than provided by the workpiece. An insert can distribute the stress over a much greater area and can be harder material than would be provided by the workpiece alone. An example of an insert is a plug-like object having external threads to bite into or cooperate with the workpiece material. The insert also has internal threads for receiving the male threads of a cooperating piece.

Studs in contrast provide an anchor for attachment of objects to a workpiece. A stud secures to a workpiece with male threads but itself provides male threads for cooperating with a female threaded nut or other fastening means.

Obviously separation of the features from the workpiece is not desired. The threads of the insert and stud can be of hardened material, much harder than the workpiece. It is not uncommon to also provide against the backing out of the threads due to vibration.

The action used may often entail keeping track of separate lock rings which bite into the workpiece and by coacting with the insert of stud and the workpiece they prevent rotational movement.

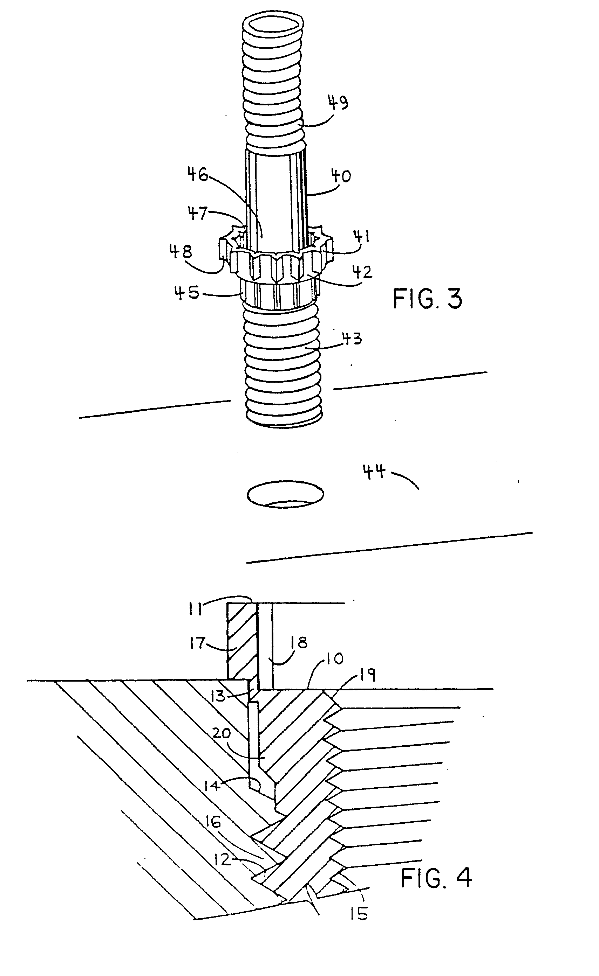

In US—A—3 179 144 a ring-locked insert, according to the precharacterizing portion of claim 1, is described having a body portion and a lock ring portion integrally connected together by a radially extending interconnection. In Fig. 4 of US—A—3 179 144 a ring-locked insert is shown with the outer teeth of the serrated portion terminating short of the interconnection and the inner radial grooves of the lock ring terminating short of the body portion top surface. In view of this fact the axial length of meshing engagement between the outer teeth and the inner radial grooves, with the lock ring in its locking position, is limited to a relatively short axial portion of the teeth and groove. This may affect the safe retention of the body of the insert by the lock ring.

The object of the invention is to provide an integral ring-locked insert or stud which provides improved retention of the insert or stud by the lock ring.

To achieve this the ring-locked insert or stud according to the invention is characterized by said cylindrical surface and the teeth of the serrated portion extending to the interconnecting means, the cylindrical inner surface and the radial grooves of the lock ring extending to the body top surface, and the interconnecting means being oriented normal with respect to the body top surface.

By the provision of these features the teeth of the serrated portion are now engagable by the radial grooves of the lock ring over the full axial length thereof, thus provided improved retention of the insert or stud by the lock ring. The ring is connected to the insert or stud by metal tabs or a metal strip, of the same material as the stud or insert, that is broken upon installation of the lock ring into the workpiece. A special tool is used for installation of the lock ring. The lock ring, after being broken from the stud or insert, rotationally couples to the balance of the fastener through meshing of the internal teeth of the lock ring and the external teeth of the fastener. The rough edges of the metal tabs or strip are shattered during installation.

The mode illustrated contemplates an insert or stud externally threaded for threaded receipt in the workpiece. The insert has a lock ring on one end which faces outward from the workpiece. This is formed when the insert is manufactured. The external threads of the insert are formed afterwards. The lock ring is connected to the insert by small metal tabs or a metal strip of the same material as the insert is made of, which is broken during installation of the lock ring.

The studs are manufactured similarly. The lock ring is first formed as attached to the center of the stud with metal tabs or a metal strip. Both the tabs and strip are formed of the same parent material as the stud. Different threads are then formed on the top and bottom shanks of the stud.

These and other features, aspects and advantages of the present invention will become apparent from the appended drawings.

A more thorough understanding of the present invention will be gained by reading the following description of the preferred embodiments with reference to the accompanying drawings in which:

Figure 1 is a side elevation view partly in section of the insert and lock ring as manufactured.

Figure 2 is a cross-sectional view of the insert and lock ring installed in a workpiece.

Figure 3 is a side elevation of a stud and lock ring as manufactured.

Figure 4 is a cross-sectional view of Figure 1 illustrating the matching internal grooves of the lock ring and external teeth of the insert and the tabs that hold the lock ring until broken by installation.

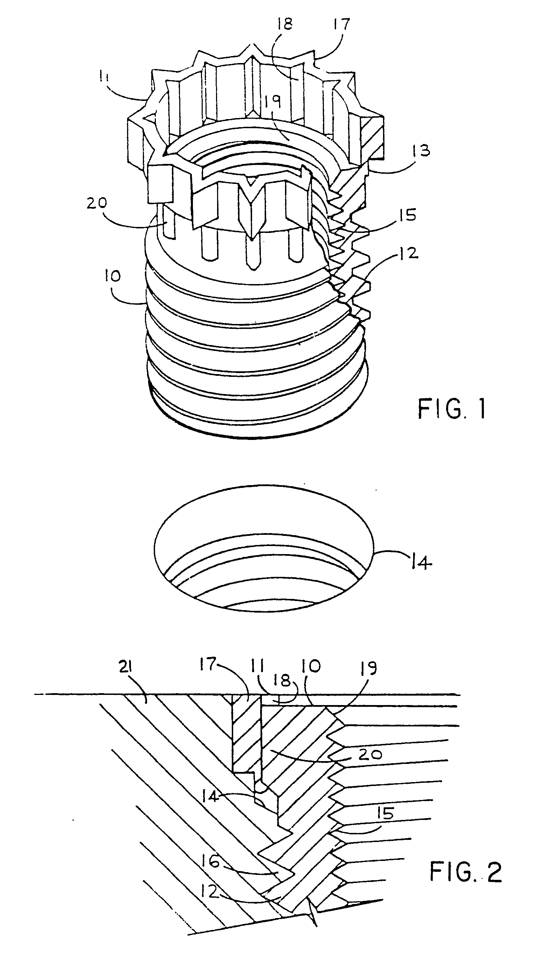

With reference to Figure 1 and 2 an insert body 10 of the present invention has a connected lock ring 11. The insert has external threads 12 running down its length. Metal tabs or bars 13 or a metal ring (not shown) of the same patent material as the insert hold the lock ring 11 to the insert 10 prior to installation. A bore 14 in the workpiece is internally threaded 16 to receive the insert. The insert 10 is also internally threaded 15 with a pilot or champher 19 that guides a male threaded fastener (not shown) into the insert. The lock ring 11 has external teeth or serrations 17 that bite or swage their way into the workpiece upon installation. Internal grooves 18 of the lock ring cooperatively engage with the external teeth 20 of the insert, after the metal tabs 13 or the metal strip is broken and the lock ring 11 installed in the workpiece. This is illustrated in Figure 2.

The internal grooves may be the shape shown or any geometric shape or design may dictate.

The metal tabs 13 are composed of thin parent metal left behind during the formation of the insert and lock ring. The major diameter of the insert 10 does not exceed the inside diameter of lock ring 11 so that no difficulty is experienced installing the lock ring 11 upon the insert 10. The external teeth 17 on the ring 11 are angled to facilitate entrance into the workpiece. Interior grooves 18 are in this mode 90° typically and accommodate the external teeth 20 of the insert. When installed, the lock ring 11 is coupled with the workpiece 21 and insert 10 so that the insert 10 can rotate.

Figure 3 illustrates a stud 40 with the lock ring 41 held in place by metal tabs or bars 42, or a metal ring (not shown), of the same parent material as the metal stud. The upper and lower portion 49 and 43 respectively is covered with threads which may be of a different size. During the installation the lower portion is rotated into the workpiece 44 that has had a bore cut and threaded to accommodate the stud 40. The lock ring 41 is then displaced using a special tool (not shown). The lock ring 41 coacts with the external teeth 45 on the center section 46 of the stud by accommodating the teeth 45 in the internal grooves 47. These grooves may be of any geometric design besides the mode illustrated. The lock ring 41 is anchored by the workpiece material 44 which it swages or bites into with its external teeth 48 when forced into the workpiece during installation. The lock ring 41 thus prevents rotation of the stud 40, after being installed in the workpiece. The upper thread 49 of the stud which may be a different size from the lower threaded 43 is rolled on after the lock ring 41 is formed.

## Claims

1. Integral ring-locked insert or stud, comprising:

a body (10; 40) having one end defining a body top surface and having a helically threaded external surface (12; 43) for threaded engagement in a tapped hole in a workpiece (21; 44), and a further threaded portion (25; 49) to receive a fastening means;

a serrated portion at said one end of said body (10; 40), said serrated portion having a straight cylindrical exterior surface and a plurality of angularly spaced, axially extending teeth (20; 45) projecting radially outward from said exterior surface;

a lock ring (11; 41) having a free end, and axially remote therefrom being integrally connected with said body (10; 40) at said one end thereof, said lock ring (11; 41) having an external cylindrical surface and a plurality of radial teeth (17; 48) projecting from said external cylindrical lock ring surface;

said lock ring (11; 41) having a straight cylindrical inner surface and a plurality of radial grooves (18; 47) extending axially in axial alignment with said teeth (20; 45) on said body serrated portion; and

interconnecting means (13; 42) between the lock ring (11; 41) and the body (10; 40), the integral connection between said lock ring (11; 41) and said body (10; 40) being adapted to be broken at said interconnecting means (13, 42),

characterized by said cylindrical surface and the teeth (20; 45) of the serrated portion extending to the interconnecting means (13; 42), the cylindrical inner surface and the radial grooves (18; 47) of the lock ring (11; 41) extending to the body top surface, and the interconnecting means (13; 42) being oriented normal with respect to the body top surface.

2. Ring-locked insert or stud according to claim 1, characterized in that said lock ring teeth (17; 48) have ends adapted to engage a workpiece top surface, said lock ring teeth (17; 48) terminating above of said body top surface leaving an untoothed portion of the external cylindrical surface between said ends of said lock ring teeth and said body top surface, said interconnecting means (13; 42) comprising said untoothed portion

## Patentansprüche

1. Einsatz oder Bolzen, der durch einen angeformten Ring sicherbar ist, mit:

einem Körper (10; 40), der ein Ende hat, das eine obere Fläche des Körpers bildet, sowie eine mit Schraubgewinde versehene Außenfläche (12; 43) zum Einschrauben in ein Gewindeloch in einem Werkstück (21, 44), sowie einen weiteren Gewindeteil (15; 49) zum Aufnehmen einer Befestigungseinrichtung;

einem gezahnten Teil an dem einen Ende des Körpers (10; 40), wobei der gezahnte Teil eine gerade zylindrische Außenoberfläche und mehrere gegenseitigen Winkelabstand aufweisende und sich axial erstreckende Zähne (20; 45), die von der Außenoberfläche radial nach außen vorstehen, aufweist;

einem Sicherungsring (11; 41), der ein freies Ende hat und axial entfernt davon mit dem Körper (10; 40) an dem einen Ende desselben einstückig verbunden ist, wobei der Sicherungsring (11; 41) eine äußere zylindrische Oberfläche und mehrere radiale Zähne (17; 48) hat, welche von der äußeren zylindrischen Sicherungsoberfläche vorstehen;

wobei der Sicherungsring (11; 41) eine gerade zylindrische Innenoberfläche und mehrere radiale Nuten (18; 47) hat, die sich axial in axialer Ausrichtung mit den Zähnen (20; 45) an dem gezahnten Teil der Körpers erstrecken; und

eine Verbindungseinrichtung (13; 42) zwischen dem Sicherungsring (11; 41) und dem Körper (10; 40), wobei die einstückige Verbindung zwischen dem Sicherungsring (11; 41) und dem Körper (10; 40) und der Verbindungsrichtung (13; 42) zerbrechbar ist,

dadurch gekennzeichnet, daß sich die zylindrische Oberfläche und die Zähne (20; 45) des gezahnten Teils zu der Verbindungseinrichtung (13; 42) erstrecken, daß sich die zylindrische Innenoberfläche und die radialen Nuten (18; 47) des Sicherungsringes (11; 41) zu der oberen Fläche des Körpers erstrecken und daß die Verbindungseinrichtung (13; 42) normal zu der oberen Fläche des Körpers ausgerichtet ist.

2. Einsatz oder Bolzen nach Anspruch 1, dadurch gekennzeichnet, daß die Sicherungsringzähne (17; 48) Enden haben, mittels welchen sie in eine obere Fläche eines Werkstückes einfassen können, wobei die Sicherungsringzähne (17; 48) oberhalb der oberen Fläche des Körpers endigen und einen ungezahnten Teil der äußeren zylindrischen Oberfläche zwischen den Enden der Verriegelungsringszähne und der oberen Fläche des Körpers lassen, wobei die Verbindungseinrichtung (13; 42) den ungezahnten Teil aufweist.

## Revendications

1. Pièce rapportée ou goujon à blocage par bague d'une seule pièce, comprenant:

un corps (10, 40), dont une extrémité délimite une surface supérieure ducorps, comprenant une surface externe filetée en hélice (12, 43) déstiné à venir se visser dans un trou taraudé d'un élément (21, 44) et une autre portion filetée (15, 29) déstinée à recevoir un moyen de fixation:

une portion dentée située à ladite extrémité dudit corps (10, 40), cette portion dentée présentant une surface extérieure cylindrique droite et une pluralité de dents s'étendant axialement et espacé angulairement qui font saillie radialement vers l'extérieur sur ladite surface extérieure;

une bague de blocage (11, 41) comprenant une extrémité libre et, éloignée axialement par rapport à celle-ci, étant solidaire dudit corps (10, 40) au niveau de ladite extrémité de celui-ci, ladite bague de blocage (11, 41) comprenant une surface cylindrique externe et une pluralité de dents radiales (17, 48) faisant saillie sur ladite surface cylindrique externe de la bague de blocage;

ladite bague de blocage (11, 41) présentant une surface intérieure cylindrique droite et une pluralité de rainures radiales (18, 47) s'étendant axialement, en alignement axial avec lesdites dents (20, 45), sur ladite portion dentée du corps; et

des moyens d'interconnexion (13, 42) entre la bague de blocage (11, 41) et le corps (10, 40), la liaison intégrante entre la bague de blocage (11, 41), et ledit corps (10, 40) étant adaptée à être cassée au niveau desdits moyens d'interconnexion (13, 42),

caractérisé en ce que ladite surface cylindrique et les dents (20, 45) de la portion dentée s'étend jusqu'aux moyens d'interconnexion (13, 42), la surface intérieure cylindrique et les rainures radiales ('18, 47) de la bague de blocage (11, 41) s'étendant jusqu'à la surface supérieure du corps et les moyens d'interconnexion (13, 42) étant orientés normalement par rapport à la surface supérieure du corps.

2. Pièce rapportée ou goujon à blocage par bague selon la revendication 1, caractérisée en ce que lesdites dents (17, 48) de la bague de blocage comportent des extrémités adaptées à coopérer avec une surface supérieure d'un élement, lesdites dents (17, 48) de la bague de blocage se terminant au-dessous de ladite surface supérieure du corps pour laisser une portion sans dents de la surface cylindrique externe située entre lesdites extrémités desdites dents de la bague de blocage et ladite surface supérieure du corps, lesdits moyens d'interconnexion (13, 42) comprenant ladite portion sans dents.

FIG. 1

FIG. 2

FIG. 3

FIG. 4